(19) Europäisches Patentamt
European Patent Office
Office européen des brevets

(11) Veröffentlichungsnummer: **0 324 369**
**A1**

(12) # EUROPÄISCHE PATENTANMELDUNG

(21) Anmeldenummer: 89100113.3

(22) Anmeldetag: 05.01.89

(51) Int. Cl.⁴: C08L 67/02 , C08L 83/10 , C08L 51/08

(30) Priorität: 12.01.88 DE 3800603

(43) Veröffentlichungstag der Anmeldung: 19.07.89 Patentblatt 89/29

(84) Benannte Vertragsstaaten: DE FR GB IT

(71) Anmelder: BAYER AG
D-5090 Leverkusen 1 Bayerwerk(DE)

(72) Erfinder: Eckel, Thomas, Dr.
Gneisenaustrasse 15a
D-4047 Dormagen 1(DE)
Erfinder: Leitz, Edgar, Dr.
Goethestrasse 63
D-4047 Dormagen 1(DE)
Erfinder: Wittmann, Dieter, Dr.
Doerperhofstrasse 15
D-4150 Krefeld 1(DE)
Erfinder: Ott, Karl-Heinz, Dr.
Paul-Klee-Strasse 54
D-5090 Leverkusen 1(DE)
Erfinder: Peters, Horst, Dr.
Winterbergstrasse 25
D-5090 Leverkusen 3(DE)
Erfinder: Schoeps, Jochen, Dr.
Windmuehlenstrasse 126
D-4150 Krefeld 1(DE)

(54) **Formmassen aus aromatischen Polyestern, Vinyl-Copolymerisaten und gepfropftem Siliconkautschuk.**

(57) Formmassen aus vollaromatischem Polyester, Vinyl-Copolymerisat und gepropftem Siliconkautschuk definierter Zusammensetzung lassen sich zu Formkörpern mit ausgezeichneter Tieftemperaturzähigkeit, Oberflächenqualität und sehr guter Spannungsrißbeständigkeit verarbeiten.

EP 0 324 369 A1

## Formmassen aus aromatischen Polyestern, Vinyl-Copolymerisaten und gepfropftem Siliconkautschuk

Die Erfindung betrifft thermoplastische Formmassen aus vollaromatischen Polyestern, Vinyl-Copolymerisaten und einem gepfropften Siliconkautschuk, ein Verfahren zu ihrer Herstellung durch Mischen der Komponenten bei erhöhter Temperatur und ihre Verwendung zur Herstellung von Formkörpern, vornehmlich durch Spritzguß.

"Vollaromatische Polyester" im Sinne der Erfindung umfassen auch vollaromatische Polyestercarbonate.

Formmassen auf Basis vollaromatischer Polyester sind bekannt. Diese können durch verschiedene Zusätze, vorzugsweise Polyolefine, Dien- und Acrylatkautschuke oder Styrolpolymerisate (EP-A 0 119 311) schlagzäh modifiziert werden. Während Dienkautschuke aufgrund ihrer bekannten Empfindlichkeit gegen thermischen und oxidativen Angriff für einige Verwendungen (Außeneinsatz) solcher Formmassen unbrauchbar sind, verleihen Polyolefine, Acrylatkautschuke und Styrolpolymerisate den Formmassen nicht die gewünschte befriedigende Schlagzähigkeit bei tiefen Temperaturen.

Siliconkautschuke zeichnen sich bekanntlich durch hohe Schlagzähigkeit auch bei Kälte aus (DE-OS 25 39 572). Die Erfahrung zeigt jedoch, daß Mischungen aus vollaromatischem Polyester und üblichem Siliconkautschuk Formkörper mit ungleichmäßiger Oberfläche ergeben.

Auch Formmassen aus aromatischen Polyestercarbonaten und Polycarbonaten mit guten Spannungsrißbeständigkeiten wurden bereits vorgeschlagen (US 4 579 903). Diese Eigenschaft kann durch Zugabe von hydrierten Styrol-Butadien-Copolymerisaten erreicht werden. Derartige Zusätze können jedoch zu Störungen der Oberfläche, wie Delaminierung, sowie zu einer verschlechterten Tieftemperaturzähigkeit der Formmassen führen, wodurch sie für bestimmte Anwendungen, wie im Kraftfahrzeug-Außenbereich, ungeeignet sind.

Überraschenderweise wurde nun gefunden, daß sich Mischungen aus vollaromatischen Polyestern, Vinyl-Copolymerisaten und speziell gepfropften, teilchenförmigen Siliconkautschuken zu Formmassen mit guter Tieftemperaturzähigkeit, Oberflächenqualität und zudem sehr guter Spannungsrißbeständigkeit verarbeiten lassen.

Gegenstand der Erfindung sind thermoplastische Formmassen auf Basis von

A. 5 bis 98, vorzugsweise 40 bis 95, insbesondere 50 bis 90, Gew.-Teilen eines vollaromatischen Polyesters,

B. 2 bis 80 Gew.-Teilen, vorzugsweise 3 bis 60 Gew.-Teilen, insbesondere 4 bis 40 Gew.-Teilen eines thermoplastischen Vinyl-Copolymerisates aus

B.1 50 bis 98, bevorzugt 60 bis 95, Gew.-Teilen Styrol, α-Methylstyrol, kernsubstituiertem Styrol, Methylmethacrylat oder Mischungen daraus und

B.2 50 bis 2, bevorzugt 40 bis 5, Gew.-Teilen Acrylnitril, Methacrylnitril, Methylmethacrylat, Maleinsäureanhydrid, N-substituiertem Maleinimid oder Mischungen daraus,

C. 1 bis 95, vorzugsweise 2 bis 60, insbesondere 3 bis 40 Gew.-Teilen eines Pfropfpolymerisat aus

C.1 5 bis 90, vorzugsweise 30 bis 80, Gew.-Teilen einer Mischung aus

C.1.1 50 bis 98, bevorzugt 60 bis 95, Gew.-Teilen Styrol, α-Methylstyrol, Halogen- oder Methyl-kernsubstituierte Styrole, Methylmethacrylat oder Mischungen dieser Verbindungen und

C.1.2 2 bis 50, bevorzugt 5 bis 40, Gew.-Teilen Acrylnitril, Methacrylnitril, Methylmethacrylat, Maleinsäureanhydrid, $C_1$-$C_4$-Alkyl- oder Phenyl-N-substituierte Maleinimide oder Mischungen dieser Verbindungen auf

C.2 10 bis 95, vorzugsweise 20 bis 70, Gew.-Teile Siliconkautschuk mit einem mittleren Teilchendurchmesser $d_{50}$ von 0,09 bis 1, vorzugsweise 0,09 bis 0,4, µm und einem Gelgehalt von mehr als 50, vorzugsweise mehr als 70, insbesondere 73 bis 98, Gew.-%, bezogen auf C.2, erhältlich aus

a) Dihalogendiorganosilan,

b) 0 bis 10 Mol-%, bezogen auf a), Trihalogenorganosilan,

c) 0 bis 3 Mol-%, bezogen auf a) Tetrahalogensilan und

d) 0 bis 0,5 Mol-%, bezogen auf a), Halogentriorganosilan, wobei die Organylreste der Verbindungen a), b) und d)

α) $C_1$-$C_6$-Alkyl oder Cyclohexyl, vorzugsweise Methyl oder Ethyl,

β) $C_6$-$C_{12}$-Aryl, vorzugsweise Phenyl,

γ) $C_1$-$C_6$-Alkenyl, vorzugsweise Vinyl oder Allyl,

δ) Mercapto-$C_1$-$C_6$-alkyl, vorzugsweise Mercaptopropyl,

bedeuten können mit der Maßgabe, daß die Summe (γ + δ) 2 bis 10 Mol-%, bezogen auf alle Organylreste der Verbindungen a), b) und d), und das Molverhältnis γ:δ (3:1) bis (1:3), vorzugsweise (2:1) bis (1:2),

betragen.

Vollaromatische Polyester A im Sinne der Erfindung sind aromatische Polyester und aromatische Polyestercarbonate, die überwiegend bis ausschließlich aus aromatischen $C_8$-$C_{14}$-Dicarbonsäuren, $C_6$-$C_{30}$-Diphenolen und gegebenenfalls Kohlensäurederivaten, z.B. Phosgen, aufgebaut sind.

Bevorzugte aromatische Dicarbonsäuren sind beispielsweise: Isophthalsäure, Terephthalsäure, Diphenylether-4,4′-dicarbonsäure und Naphthalin-2,6-dicarbonsäure. Besonders bevorzugt sind Iso- und Terephthalsäure. Bevorzugtes Kohlensäurederivat ist Phosgen.

Bevorzugte Diphenole für die Herstellung der vollaromatischen Polyester A sind Verbindungen der Formel I:

HO - Z - OH (I),

worin

Z einen zweiwertigen ein- oder mehrkernigen aromatischen Rest mit 6 bis 30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel II

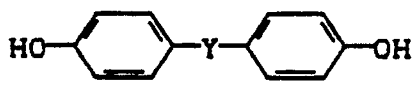 (II),

in der

Y eine Einfachbindung, einen Alkylen- oder Alkylidenrest mit 1 bis 7 C-Atomen, einen Cycloalkylen- oder Cycloalkylidenrest mit 5 bis 12 C-Atomen, -O-, -S-, $-\underset{\substack{\|\\ O}}{S}-$, $-SO_2-$ oder $-\underset{\substack{\|\\ O}}{C}-$

bedeutet

sowie deren kernalkylierte und kernhalogenierte Derivate.

Beispielsweise seien genannt: Hydrochinon, Resorcin, Dihydroxydiphenyle, Bis-(hydroxyphenyl)-alkane, Bis-(hydroxyphenyl)-cycloalkane, Bis-(hydroxyphenyl)-ether, Bis-(hydroxyphenyl)-ketone, Bis-(hydroxyphenyl)-sulfoxide, Bis-(hydroxyphenyl)-sulfone und/oder A,A′-Bis-(hydroxyphenyl)-diisopropylbenzole sowie deren kernalkylierte und/oder kernhalogenierte Derivate.

Bevorzugte Diphenole sind: Bisphenol A, Tetramethylbisphenol A, 1,1-Bis-(4-hydroxyphenyl)-isobutan, 1,1-Bis-(4-hydroxyphenyl)-cyclohexan, 4,4′-Dihydroxy-diphenylsulfid, 4,4′-Dihydroxydiphenylsulfon, sowie deren di- und tetrahalogenierte Derivate. Besonders bevorzugt ist Bisphenol A.

Mögliche Verzweigungsmittel sind in den DE-OS 2 940 024 und 3 007 934 genannt.

Als Kettenabbrecher für die vollaromatischen Polyester A werden vorzugsweise Phenol, Alkylphenole mit $C_1$-$C_{12}$-Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch $C_1$-$C_{22}$-Alkylgruppen und Halogenatome substituiert sein können, in Mengen von 0,1 bis 10 Mol-% (im Falle von Phenolen bezogen auf Diphenole, im Falle von Säurechloriden bezogen auf Säuredichloride) verwendet. Weiterhin kommen die Chloride von aliphatischen Monocarbonsäuren mit bis zu 22 C-Atomen in Betracht.

Am Aufbau der vollaromatischen Polyester A können auch bis jeweils 30 Mol-% der Dicarbonsäuren und Dihydroxyverbindungen aliphatische Baugruppen, z.B. Adipinsäure und Butandiol-1,4, beteiligt sein.

Weiterhin können die vollaromatischen Polyester A teilweise aus aromatischen Hydroxycarbonsäuren, z.B. p-Hydroxy-benzoesäure, aufgebaut sein. Der Anteil solcher Hydroxycarbonsäuren kann bis zu 100 Mol-% (bezogen auf Bisphenol) betragen.

Falls Iso- und Terephthalsäure gemeinsam am Aufbau der vollaromatischen Polyester A beteiligt sind, kann deren Verhältnis 1:20 bis 20:1 betragen.

Die vollaromatischen Polyester können vorzugsweise bis zu 99 Mol-%, insbesondere bis zu 80 Mol-%, besonders bevorzugt bis zu 50 Mol-%, Carbonatgruppen, bezogen auf die Summe von Ester und Carbonatgruppen, enthalten.

Sowohl der Ester- als auch der Carbonatanteil der vollaromatischen Polyestercarbonate A kann in Form von Blöcken oder statistisch verteilt im Polykondensat vorliegen.

Ein gewünschter Carbonatgruppengehalt kann auch durch Mischen von vollaromatischem Polyester mit aromatischen Polycarbonat eingestellt werden.

Die Herstellung der vollaromatischen Polyester A ist bekannt und z.B. in den DE-OS 1 495 626, 2 232 877, 2 703 376, 3 000 610, 2 714 544, 2 940 024 und 3 007 934 beschrieben. Besonders bevorzugt ist das Phasengrenzflächenverfahren.

Die relative Lösungsviskosität ($\eta_{rel}$) der vollaromatischen Polyester A liegt im Bereich von 1,18 bis 1,4, vorzugsweise 1,22 bis 1,3 (gemessen an Lösungen von 0,5 g Polyester A in 100 ml $CH_2Cl_2$-Lösung bei 25° C).

Bevorzugte Vinyl-Copolymerisate B sind solche aus wenigstens einem Monomeren aus der Reihe Styrol, $\alpha$-Methylstyrol und/oder kernsubstituiertem Styrol mit wenigstens einem Monomeren aus der Reihe Acrylnitril, Methacrylnitril, Methylmethacrylat, Maleinsäureanhydrid und/oder N-subst.-Maleinimid.

Copolymerisate B entstehen häufig bei der Pfropfpolymerisation zur Herstellung der Komponente C als Nebenprodukte, besonders dann, wenn große Mengen Monomere auf kleine Mengen Kautschuk gepfropft werden.

Die erfindungsgemäß einzusetzende Menge an Copolymerisat B von 2 bis 80 Gew.-Teilen, bezogen auf 100 Gew.-Teile aus A + B + C, bezieht diese Nebenprodukte der Pfropfpolymerisation nicht mit ein.

Die Copolymerisate B sind harzartig, thermoplastisch und kautschukfrei. Besonders bevorzugte erfindungsgemäße Copolymerisate B sind statistisch aufgebaute Copolymerisate aus Styrol und Maleinsäureanhydrid, die bevorzugt durch eine kontinuierliche Masse- oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt bei 5 bis 25 Gew.-%.

Anstelle von Styrol können die Polymeren auch kernsubstituierte Styrole, wie p-Methylstyrol, Vinyltoluol, 2,4-Dimethylstyrol und andere substituierte Styrole, wie $\alpha$-Methylstyrol, enthalten.

Die Molekulargewichte (Zahlenmittel $\overline{M}n$) der erfindungsgemäß geeigneten statistisch aufgebauten Styrol-Maleinsäureanhydrid-Copolymeren gemäß Komponente B können über einen weiten Bereich variieren. Bevorzugt ist der Bereich von 60.000 bis 200.000. Bevorzugt ist für diese Produkte eine Grenzviskosität ($\eta$) von 0,3 bis 0,9 (gemessen in Dimethylformamid bei 25° C; siehe hierzu Hoffmann, Krömer, Kuhn, Polymeranalytik I, Stuttgart 1977, Seite 316 ff.).

Bevorzugte Siliconkautschuke C.2 sind solche, deren Organylreste zu mindestens 80 Mol-% aus Methylgruppen bestehen.

Als Endgruppe fungiert im allgemeinen eine Diorganyl-hydroxyl-siloxy-Einheit, vorzugsweise eine Dimethylhydroxysiloxy-Einheit.

Für die Herstellung der Siliconkautschuke C.2 bevorzugte Silane a) bis d) enthalten als Halogensubstituenten vorzugsweise Chlor.

"Erhältlich" im Sinne der Erfindung bedeutet, daß der Siliconkautschuk C.2 nicht unbedingt aus den Halogenverbindungen a) bis d) hergestellt werden muß. Die Definition umfaßt vielmehr auch Siliconkautschuke C.2 gleicher Struktur, die aus Silanen mit anderen hydrolysierbaren Gruppen, wie $C_1$-$C_6$-Alkoxygruppen oder aus cyclischen Siloxanoligomeren , hergestellt worden sind.

Die Siliconkautschuke C.2 sind teilchenförmig.

Der mittlere Teilchendurchmesser $d_{50}$ ist der Durchmesser, oberhalb und unterhalb dessen jeweils 50 Gew.-% der Teilchen liegen. Er kann mittels Ultrazentrifugen-Messungen (W. Scholtan, H. Lange, Kolloid, Z. und Z. Polymere 250 (1972), 782 bis 796) bestimmt werden.

Der Gelgehalt wird bei 25° C in Aceton bestimmt; vgl. DE-PS 2 421 288, Spalte 7, Zeilen 17 bis 37.

Bei der Herstellung der Pfropfpolymerisate C durch Pfropfcopolymerisation bilden sich im allgemeinen neben dem eigentlichen Pfropfcopolymerisat in bestimmten Ausmaß auch freie Polymerisate bzw. Copolymerisate der die Pfropfhülle bildenden Pfropfmonomeren. Pfropfpolymerisate C im Sinne der Erfindung sind deshalb durch Polymerisation der Pfropfmonomeren C.1 in Gegenwart des Siliconkautschuks C.2 erhaltene Produkte, genau genommen also im allgemeinen ein Gemisch aus Pfropfcopolymerisat und freiem (Co-)Polymerisat der Pfropfmonomeren C.1.

Die erfindungsgemäßen Formmassen weisen optimale Eigenschaften auf, wenn die Menge an freiem (Co-)polymerisat 50, vorzugsweise 30, insbesondere 20 Gew.-%, bezogen auf Komponente C, nicht übersteigt.

Die Pfropfpolymerisate C können durch radikalische Pfropfpolymerisation, beispielsweise analog DE-PS 24 21 288, hergestellt werden, z.B. nach folgendem Verfahren:

Zunächst wird in einer ersten Stufe durch Emulsionspolymerisation eines Siliconoligomeren der Siliconkautschuk C.2 hergestellt.

Die Herstellung einer Emulsion eines langkettigen OH-terminierten Siliconöls durch Emulsionspolymerisation ist dem Fachmann im Prinzip geläufig. Beispielhaft wird hierzu auf die US-PS 2 891 910 sowie auf

die GB-PS 102 424 verwiesen. Besonders bevorzugt ist das in der britischen Patentschrift offenbarte Verfahren, eine Alkylbenzolsulfonsäure einzusetzen, da hier Emulgator und Polymerisationskatalysator in einem vorliegen. Nach erfolgter Polymerisation wird die Säure neutralisiert.

Dementsprechend kann die Emulgatorkonzentration gering gehalten werden, und man hat nach Fertigstellung der Emulsion wenig störende Fremdmoleküle aus dem Katalysator in dem fertigen Produkt. Anstelle der genannten Alkylbenzolsulfonsäuren können aber auch n-Alkylsulfonsäuren eingesetzt werden. Es ist weiterhin möglich, neben der katalytisch wirksamen Sulfonsäure auch zusätzlich Co-Emulgatoren einzusetzen.

Derartige Co-Emulgatoren können nichtionischer sowie anionischer Natur sein. Als anionische Co-Emulgatoren kommen insbesondere Salze der obengenannten n-Alkyl oder Alkylbenzolsulfonsäuren in Frage. Nichtionogene Co-Emulgatoren sind Polyoxyethylenderivate von Fettalkoholen und Fettsäuren. Beispiele für derartige Emulgiermittel sind POE (3)-Laurylalkohol, POE (20)-Oleylalkohol, POE (7)-Nonylphenol oder POE (10)-Stearat (die Schreibweise POE (X)-Laurylalkohol bedeutet, daß an ein Molekül Laurylalkohol X Einheiten Ethylenoxid addiert worden sind, wobei die Zahl X einen Mittelwert darstellt).

Im allgemeinen sind Siliconöle, die durch Emulsionspolymerisation in Anwesenheit von nichtionogenen Co-Emulgatoren entstanden sind, von niedrigerem Molekulargewicht als solche, bei denen kein Co-Emulgator verwendet wurde. Eine Steuerung des Molekulargewichts des bei der Emulsionspolymerisation entstehenden OH-terminierten Siliconöls erfolgt z.B. über die Temperatur bei der Gleichgewichtsbildung zwischen Siloxan, Wasser und dem durch Ringöffnung des Siloxans zunächst gebildeten Silanöls (bezüglich Einzelheiten zum Zusammenhang zwischen Temperatur und Molekulargewicht wird auf die Arbeit von D.R. Weyenberg et al., J. Polym. Sci., Part C, 27, S. 28 bis 34 (1969) verwiesen).

Gruppen $\gamma$ und $\delta$ können in das Siliconpolymer durch Arbeiten in Anwesenheit geeigneter Siloxanoligomerer eingefügt werden. Geeignete Ausgangsoligomere sind z.B. Tetramethyltetravinylcyclotetrasiloxan oder $\alpha$-Mercaptopropylmethyldimethoxysilan oder dessen Hydrolysat.

Diese funktionellen Oligomeren werden dem Hauptoligomer, z.B. Octamethylcyclotetrasiloxan, in den gewünschten Mengen beigefügt.

Analog kann auch der Einbau längerkettiger Alkylreste, wie z.B. Ethyl, Propyl oder dgl. bzw. der Einbau von Phenylgruppen erreicht werden.

Eine ausreichende Vernetzung des Siliconkautschuks kann schon erreicht werden, wenn die Reste $\gamma$ und $\delta$ bei der Emulsionspolymerisation miteinander reagieren, so daß die Zugabe eines externen Vernetzers entbehrlich sein kann, jedoch kann ein Vernetzung bewirkendes Silan zugefügt werden, um den Vernetzungsgrad des Siliconkautschukes zu erhöhen.

Verzweigungen oder Vernetzungen können durch Zugabe von z.B. Tetraethoxysilan oder eines Silans der allgemeinen Formel Organyl-$SiX_3$, wobei X eine hydrolysierbare Gruppe, insbesondere den Alkoxyrest, darstellt, erzielt werden. Insbesondere bevorzugt sind neben Tetraethoxysilan Methyltrimethoxysilan oder Phenyltrimethoxysilan.

Zur Herstellung des Pfropfcopolymerisates C können die Pfropfmonomeren C.1.1 und C.1.2 in Anwesenheit des Siliconkautschuks radikalisch pfropfpolymerisiert werden insbesondere bei 40 bis 90 °C. Die Pfropfpolymerisation kann in Suspension, Dispersion oder Emulsion durchgeführt werden. Bevorzugt ist die kontinuierliche oder diskontinuierliche Emulsionspfropfpolymerisation. Diese Pfropfpolymerisation wird unter Einsatz von Radikalinitiatoren durchgeführt (aus der Gruppe der Peroxide, Azoverbindunge, Hydroperoxide, Persulfate, Perphosphate) sowie auch gegebenenfalls unter Einsatz von anionischen Emulgatoren, z.B. Carboxoniumsalzen, Sulfonsäuresalzen oder organischen Sulfaten. Dabei bilden sich Pfropfpolymerisate mit hohen Pfropfausbeuten, d.h. ein großer Anteil des Polymerisates der Monomeren C.1 wird an den Siliconkautschuk C.2 chemisch gebunden. Dieser besondere Siliconkautschuk C.2 macht besondere Maßnahmen (die eine hohe Pfropfung ermöglichen) überflüssig.

Die so hergestellten Pfropfpolymerisate C können nach bekannten Verfahren aufgearbeitet werden, z.B. durch Koagulation der Latices mit Elektrolyten (Salzen, Säuren oder Gemischen davon) und anschließende Reinigung und Trocknung.

Die erfindungsgemäßen Formmassen können weitere, für aromatische Polyester sowie Pfropfpolymerisate bekannte Zusätze, wie Stabilisatoren, Pigmente, Entformungsmittel, Flammschutzmittel und Antistatika, in den üblichen Mengen enthalten.

Die erfindungsgemäßen Formmassen können hergestellt werden, indem man die Bestandteile in bekannter Weise vermischt und bei erhöhten Temperaturen, vorzugsweise bei 250 bis 350 °C, in üblichen Vorrichtungen, wie Innenknetern, Extrudern oder Doppelwellenschnecken, schmelzcompoundiert oder schmelzextrudiert. Die einzelnen Komponenten können nacheinander oder gleichzeitig gemischt werden.

Weiterer Gegenstand der Erfindung ist also ein Verfahren zur Herstellung der beschriebenen Formmassen durch Mischen der Komponenten bei erhöhter Temperatur.

Die erfindungsgemäßen Formmassen können zur Herstellung von Formkörpern jeder Art z.B. durch Spritzgießen verwendet werden. Beispiele für Formkörper sind: Gehäuseteile (z.B. für Haushaltsgeräte, wie Saftpressen, Kaffeemaschinen, Mixer), Abdeckplatten für das Baugewerbe, Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

## Beispiele

Angegebene Teile bedeuten Gewichtsteile.

### A. Vollaromatisches Polyestercarbonat

A1 Polyestercarbonat mit einem Esteranteil von 50 Mol-% auf Basis von Bisphenol-A, Iso- und Terephthalsäure (1:1) mit 3 Mol-%, bezogen auf Bisphenol-A-Einheiten, p-Isooctylphenyl-Endgruppen mit einer relativen Viskosität $\eta$rel von 1,30 (gemessen an einer Lösung von 0,5 g Polyestercarbonat in 100 ml $CH_2Cl_2$ bei 25° C).

A2 Lineares Polycarbonat auf Basis Bisphenol A mit einer relativen Lösungsviskosität $\eta$rel von 1,26 bis 1,28, gemessen in $CH_2Cl_2$ bei 25° C und in einer Konzentration von 0,5 g/100 ml.

### B. Styrol-Maleinsäureanhydrid-Copolymerisat

B1 Styrol-Maleinsäureanhydrid-Copolymerisat mit einem Maleinsäureanhydrid-Anteil von 8 % der Fa. Arco Polymers, Inc. (Dylark 232) mit einem L-Wert von 1,7 g/10 min und einem Zahlenmittel des Molekulargewichts von 135 000 g/mol.

B2 Styrol/Acrylnitril-Copolymerisat mit einem Styrol/Acryl nitril-Verhältnis von 72:28 und einer Grenzviskosität von ($\eta$) = 0,55 dl/g (Messung in Dimethylformamid bei 20° C).

### C. Pfropfpolymerisat

1. Herstellung der Siliconkautschuk-Emulsion (C.2)

38,4 Teile Octamethylcyclotetrasiloxan, 1,2 Teile Tetramethyltetravinylcyclotetrasiloxan und 1 Teil $\alpha$-Mercaptopropylmethyldimethoxysiloxan werden miteinander verrührt. 0,5 Teile Dodecylbenzolsulfonsäure werden zugefügt, anschließend 58,4 Teile Wasser innerhalb 1 Stunde zugegeben. Dabei wird intensiv gerührt. Die Voremulsion wird mit Hilfe einer Hochdruckemulgiermaschine 2 mal bei 200 bar homogenisiert. Man gibt weitere 0,5 Teile Dodecylbenzolsulfonsäure hinzu. Die Emulsion wird 2 Stunden bei 85° C und anschließend 36 Stunden bei 20° C gerührt. Neutralisiert wird mit Hilfe von 5 n-NaOH. Es resultiert eine stabile Emulsion mit einem Feststoffgehalt von ca. 36 Gew.-%. Das Polymer besitzt einen Gelgehalt von 82 Gew.-%, gemessen in Toluol; die mittlere Teilchengröße beträgt 300 nm.

2. Herstellung der Pfropfpolymerisate C

In einem Reaktor werden vorgelegt:
2107 Teile Latex C.2 und 1073 Teil Wasser.

Nach Initiierung mittels einer Lösung von 7,5 Teilen Kaliumperoxydisulfat in 195 Teilen Wasser bei 65° C werden folgende Lösungen in den Reaktor innerhalb von 4 Stunden gleichmäßig eingespeist:
Lösung 1: 540 Teile Styrol und 210 Teile Acrylnitril;
Lösung 2: 375 Teile Wasser und 15 Teile Natriumsalz von $C_{14}$-$C_{18}$-Alkylsulfonsäuren.

Anschließend wird innerhalb von 6 Stunden bei 65 °C auspolymerisiert. Es resultiert ein Latex mit einem Feststoffgehalt von ca. 33 Gew.-%.

Nach Koagulation mit einer wäßrigen Magnesiumchlorid/Essigsäure-Lösung, Filtration und Trocknung im Vakuum wird das Pfropfpolymerisat in Form eines weißen Pulvers erhalten.

Herstellung und Prüfung der erfindungsgemäßen Formmassen

Die Komponenten A und B und C wurden auf einem kontinuierlich arbeitenden Doppelwellenextruder aufgeschmolzen und homogenisiert (Massetemperatur 280 °C). Der Schmelzstrang wurde vor dem Austritt aus der Düse entgast, granuliert und getrocknet.

Von den Formmassen wurden auf einer Spritzgußmaschine Stäbe der Abmessung 80 x 10 x 4 mm (Verarbeitungstemperatur: 280 °C) hergestellt, an denen die Kerbschlagzähigkeit (nach Methode ISO 180) bei Raumtemperatur, -20 °C, -40 °C und -60 °C gemessen wurde.

Daraus wurde der Zäh-Spröd-Übergang bestimmt, d.h. jener Temperaturbereich, in dem die ersten Sprödbrüche auftreten.

Das Spannungsrißverhalten wurde an Proportionsalstäben 0,7, Massetemperatur 280 °C, gemäß DIN 53 449/3 untersucht. Als Kraftstoffsimulanz wurde eine Mischung aus 50 % Toluol und 50 % Isooctan verwendet. Die Probekörper wurden mittels einer Kreisbogenschablone vorgedehnt und 5 Minuten bei 23 °C im Kraftstoffsimulanz gelagert. Die Vordehnung $\epsilon_x$betrugen 0,4 bis 2,4 %. Das Spannungsrißverhalten wurde über die Rißbildung bzw. den Bruch in Abhängigkeit der Vordehnung beurteilt.

Wie nachfolgende Tabelle zeigt, werden erfindungsgemäß (Beispiel 3 und 4) Formmassen erhalten, die bei gleichem Polyestercarbonat- und Kautschukgehalt gegenüber den Vergleichsbeispielen 1 und 2 eine bessere Zähigkeit bei tiefen Temperaturen sowie außerdem eine wesentlich bessere Spannungsrißbeständigkeit besitzen. Sämtliche erfindungsgemäße Formkörper weisen vollkommen gleichmäßige Oberflächen auf. Bei Verwendung der erfindungsgemäß besonders bevorzugten Kombination aus Styrol-Maleinsäureanhydrid-Copolymerisaten und speziellen Siliconpfropfkautschuken (Beispiel 4), werden Formmassen mit besonders hoher Spannungsrißbeständigkeit erhalten.

Tabelle 1

Zusammensetzung und Eigenschaften der Formmassen

| Beispiel | $A_1$ (Gew.-%) | $A_2$ (Gew.-%) | $B_1$ (Gew.-%) | $B_2$ (Gew.-%) | C (Gew.-%) | C* (Gew.-%) | Zäh-Spröd Übergang (°C) | Bruch bei $c_x$ (%) |
|---|---|---|---|---|---|---|---|---|
| 1 (Vergleich) | 60 | 15 | - | 10 | - | 15 | -20/-30 | 0,4 |
| 2 (Vergleich) | 60 | 15 | 10 | - | - | 15 | -20/-30 | 0,4 |
| 3 | 60 | 15 | - | 10 | 15 | - | <-60 | 1,0 |
| 4 | 60 | 15 | 10 | - | 15 | - | -40/-50 | 2,4 |

C* Pfropfpolymerisat von 50 Gew.-Teilen eines Copolymerisats aus Styrol und Acrylnitril im Verhältnis 72:28 auf 50 Gew.-Teilen teilchenförmigen Polybutadienkautschuk (Teilchengröße $d_{50}$: 0,4 µm) hergestellt durch mulsionspolymerisation.

## Ansprüche

1. Thermoplastische Formmassen auf Basis von

A. 5 bis 98 Gew.-Teilen eines vollaromatischen Polyesters,

B. 2 Bis 80 Gew.-Teilen eines thermoplastischen Vinyl-Copolymerisates aus

B.1 50 bis 98 Gew.-Teilen Styrol, α-Methylstyrol, kernsubstituiertem Styrol, Methylmethacrylat oder Mischungen daraus und

B.2 50 bis 2 Gew.-Teilen Acrylnitril, Methacrylnitril, Methylmethacrylat, Maleinsäureanhydrid, N-substituiertem Maleinimid oder Mischungen daraus,

C. 1 bis 95 Gew.-Teilen eines Pfropfpolymerisates aus

C.1 5 bis 90 Gew.-Teilen einer Mischung aus

C.1.1 50 bis 98 Gew.-Teilen Styrol, α-Methylstyrol, Halogen- oder Methyl-kernsubstituierte Styrole, Methylmethacrylat oder Mischungen dieser Verbindungen und

C.1.2 2 bis 50 Gew.-Teilen Acrylnitril, Methacrylnitril, Methylmethacrylat, Maleinsäureanhydrid, $C_1$-$C_4$-Alkyl- oder Phenyl-N-substituierte Maleinimide oder Mischungen dieser Verbindungen auf

C.2 10 bis 95 Gew.-Teile Siliconkautschuk mit einem mittleren Teilchendurchmesser $d_{50}$ von 0,09 bis 1 und einem Gelgehalt von mehr als 50, bezogen auf C.2, erhältlich aus

a) Dihalogendiorganosilan,

b) 0 bis 10 Mol-%, bezogen auf a), Trihalogenorganosilan,

c) 0 bis 3 Mol-%, bezogen auf a), Tetrahalogensilan und

d) 0 bis 0,5 Mol-%, bezogen auf a), Halogentriorganosilan, wobei die Organylreste der Verbindungen a), b) und d)

α) $C_1$-$C_6$-Alkyl oder Cyclohexyl,

β) $C_6$-$C_{12}$-Aryl

γ) $C_1$-$C_6$-Alkenyl

δ) Mercapto-$C_1$-$C_6$-alkyl

bedeuten können mit der Maßgabe, daß die Summe (γ + δ) 2 bis 10 Mol-%, bezogen auf alle Organylreste der Verbindungen a), b) und d), und das Molverhältnis γ:δ (3:1) bis (1:3) betragen.

2. Formmassen nach Anspruch 1 auf Basis von 40 bis 95 Gew.-Teilen Komponente A, 3 bis 60 Gew.-Teilen Komponente B und 2 bis 60 Gew.-Teilen Komponente C.

3. Formmassen nach Ansprüchen 1 bis 2, dadurch gekennzeichnet, daß das Pfropfpolymerisat C aus 30 bis 80 Gew.-Teilen eines Pfropfmonomeren C.1 und 20 bis 70 Gew.-Teilen eines Siliconkautschuks C.2 hergestellt ist.

4. Formmassen nach Ansprüchen 1 bis 3, dadurch gekennzeichnet, daß der Teilchendurchmesser $d_{50}$ des Siliconkautschuks C.2 0,09 bis 0,4 µm beträgt.

5. Formmassen nach Ansprüchen 1 bis 4, dadurch gekennzeichnet, daß der Gelgehalt des Siliconkautschuks C.2 mehr als 70 Gew.-% beträgt.

6. Formmassen nach Ansprüchen 1 bis 4, dadurch gekennzeichnet, daß der Gelgehalt des Siliconkautschuks C.2 73 bis 98 Gew.-% beträgt.

7. Formmassen nach Ansprüchen 1 bis 6, dadurch gekennzeichnet, daß mindestens 80 Mol-% der Organylreste der Komponenten a), b) und d) Methylgruppen sind, die Reste γ Vinyl- und/oder Allylgruppen und die Reste δ Mercaptopropylreste sind.

8. Formmassen gemäß Anspruch 1 bis 7, dadurch gekennzeichnet, daß sie zusätzlich mindestens einen Zusatz, ausgewählt aus der Gruppe der Stabilisatoren, Pigmente, Entformungsmittel, Flammschutzmittel und Antistatika, enthalten.

9. Verfahren zur Herstellung der Formmassen nach Ansprüchen 1 bis 8 durch Mischen der Komponenten bei erhöhter Temperatur.

10. Verwendung der Formmassen nach Ansprüchen 1 bis 8 zur Herstellung von Formkörpern.

Europäisches Patentamt

# EUROPÄISCHER RECHERCHENBERICHT

Nummer der Anmeldung: EP 89100113.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP - A2 - 0 214 658 (UNION CARBIDE CORP.) * Anspruch 1; Seite 10, Zeilen 1-3; Seite 11, Zeilen 3-19 * -- | 1 | C 08 L 67/02<br>C 08 L 83/10<br>C 08 L 51/08 |
| A | US - A - 4 582 876 (WEEMES et al.) * Ansprüche * -- | 1 | |
| D,A | EP - A - 0 119 311 (GENERAL ELECTRIC COMP.) * Ansprüche 1,4,8 * ---- | 1 | |

| RECHERCHIERTE SACHGEBIETE (Int. Cl.4) |
|---|
| C 08 L 67/00 |
| C 08 L 83/00 |
| C 08 L 51/00 |

Der vorliegende Recherchenbericht wurde für alle Patentansprüche erstellt.

| Recherchenort | Abschlußdatum der Recherche | Prufer |
|---|---|---|
| WIEN | 12-04-1989 | ZINN-ZINNENBURG |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82